# EUROPÄISCHE PATENTSCHRIFT

(11) **EP 4 055 597 B1**
(45) Veröffentlichungstag und Bekanntmachung des Hinweises auf die Patenterteilung: **26.03.2025**
(21) Anmeldenummer: 20816384.0
(22) Anmeldetag: 07.11.2020
(51) Int. Cl.: G11B 17/22

(54) **HANDHABUNGSVORRICHTUNG FÜR FESTPLATTEN**
HANDLING DEVICE FOR HARD DRIVES
DISPOSITIF DE MANIPULATION DE DISQUES DURS

(30) Priorität: 08.11.2019 DE 102019007755
(43) Veröffentlichungstag der Anmeldung: 14.09.2022
(73) Patentinhaber: Zimmer, Martin, 77866 Rheinau (DE); Zimmer, Günther, 77866 Rheinau (DE)
(72) Erfinder: Zimmer, Martin, 77866 Rheinau (DE); Zimmer, Günther, 77866 Rheinau (DE)
(74) Vertreter: Thämer, Wolfgang
(86) Internationale Anmeldenummer: PCT/DE2020/000266
(87) Internationale Veröffentlichungsnummer: WO 2021/089068

(56) Entgegenhaltungen:
- WO-A2-2009/129069
- US-A1- 2009 265 032
- US-A1- 2018 267 716
- US-A1- 2018 313 890

## Beschreibung

Die Erfindung betrifft eine Handhabungsvorrichtung zum Austausch von Festplatten aus einer Schublade mit einer Vielzahl von in einem Speichermagazin angeordneten Festplatten, die ein Basisgerüst und ein relativ hierzu in Höhenrichtung verstellbares Traggerüst aufweist.

Aus der EP 0 351 470 A2 ist eine Festplattenwechselvorrichtung bekannt. Hierbei wird die einzelne Festplatte mittels einer in der Rechenanlage angeordneten Fördervorrichtung ausgegeben.

Die WO 2009 129069 A2 offenbart eine Aggregation eines Magazins, einer Prüfstelle und einer Handhabungsvorrichtung. Die Handhabungsvorrichtung hat drei rotatorische Hauptachsen sowie zwei rotatorische und eine lineare Nebenachse. Diese Handhabungsvorrichtung hat eine einzige Greifvorrichtung.

Aus der US 2018/0313890 A1 sind mehrere Ausführungsformen von Zuführvorrichtungen für automatische Prüfvorrichtungen u.a. für Festplatten bekannt, deren Arbeitsraum auf die Reichweite des Festplattengreifers beschränkt ist.

Der vorliegenden Erfindung liegt die Problemstellung zugrunde, eine Festplattenwechselvorrichtung für eine Vielzahl von Festplatten zu entwickeln.

Diese Problemstellung wird mit den Merkmalen des Hauptanspruches gelöst. Dazu ist das Traggerüst entlang von Führungsschienen des Basisgerüsts geführt. Das Traggerüst weist einen Wartungsbereich mit einer Aufstellfläche auf. Parallel zur Aufstellfläche ist eine Greifzange linear verfahrbar zum Ziehen der Schublade mit dem Speichermagazin auf die Aufstellfläche und zum Fördern dieser Schublade in ihre Ausgangsstellung. Eine eine Parallelgreifvorrichtung aufweisende Festplattengreifeinheit hängt verfahrbar an einem Kreuzschlitten des Traggerüsts. Außerdem ist die Parallelgreifvorrichtung relativ zum Traggerüst in der Höhe mittels einer Höhenverstelleinheit verstellbar.

Die Handhabungsvorrichtung zieht mittels der Greifzange eine Schublade mit einem Speichermagazin auf die Aufstellfläche des Wartungsbereichs. Aufgrund der Höhenverstellbarkeit des Traggerüsts relativ zum Basisgerüst kann das Speichermagazin in nahezu beliebiger Höhe der Rechenanlage angeordnet sein. Im Wartungsbereich der Handhabungsvorrichtung werden die Festplatten ausgetauscht. Anschließend wird die Schublade mit dem Speichermagazin wieder mittels der Greifzange in seine Ausganglage gefördert.

Weitere Einzelheiten der Erfindung ergeben sich aus den Unteransprüchen und der nachfolgenden Beschreibung schematisch dargestellter Ausführungsformen.
- Figur 1:: Handhabungsvorrichtung und Schublade;
- Figur 2:: Isometrische Rückansicht der Figur 1;
- Figur 3:: Schublade mit Speichermagazin
- Figur 4:: Unteransicht des Traggerüsts;
- Figur 5:: Traggerüst;
- Figur 6:: Greifzange;
- Figur 7:: Festplattengreifeinheit;
- Figur 8:: Seitenansicht der Festplattengreifeinheit.

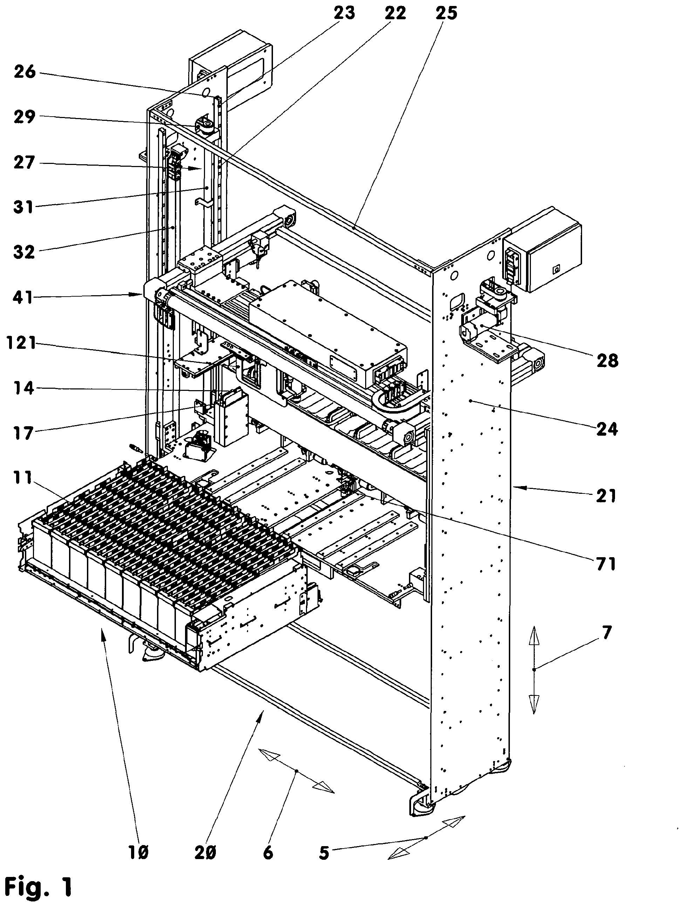

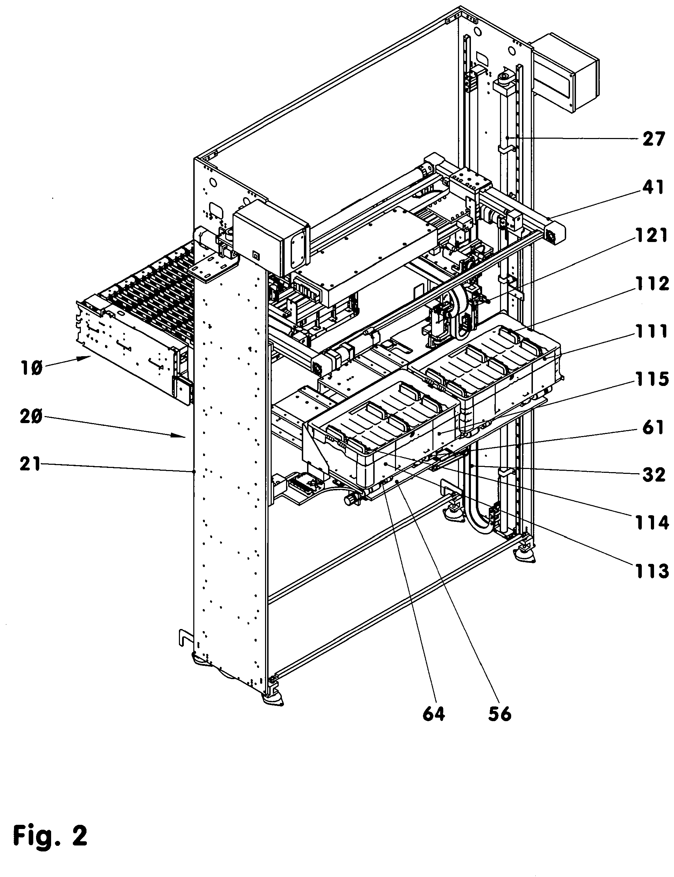

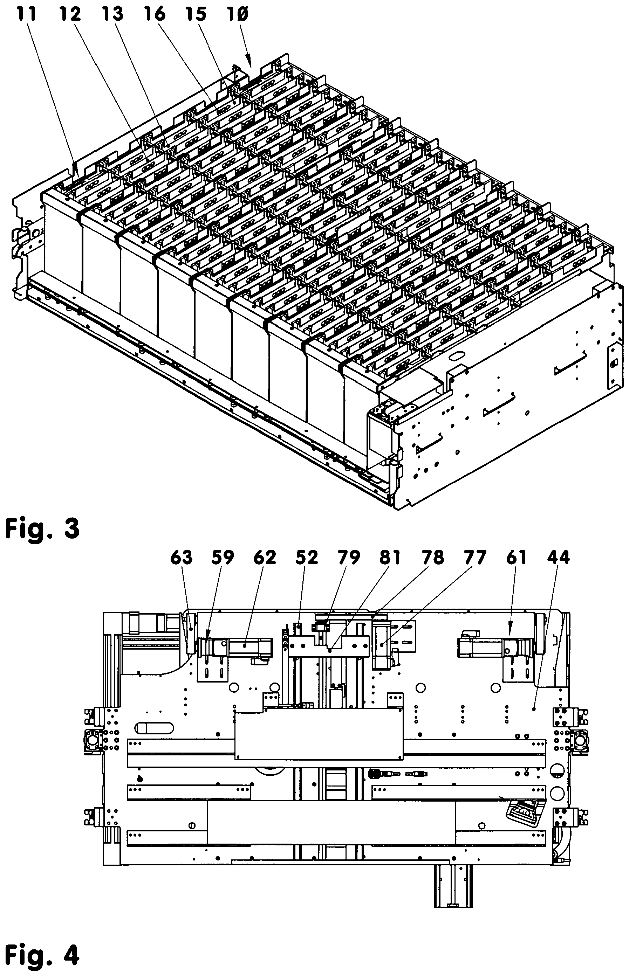

Die Figuren 1 und 2 zeigen eine Schublade (10) mit einer Vielzahl von in einem Speichermagazin (11) angeordneten Festplatten (12) und eine Handhabungsvorrichtung (20) zum Austausch der Festplatten (12), vgl. Figur 3. Das Speichermagazin (11) dient beispielsweise der Datenspeicherung in einer hier nicht dargestellten Rechneranlage. Diese Rechenanlage kann mehrere Speichermagazine (11) aufweisen, die z.B. übereinander und/oder nebeneinander angeordnet sind. Jedes der Speichermagazine (11) sitzt in einer aus der Rechenanlage herausziehbaren Schublade (10). Die Schublade (10) kann hierbei in einem teleskopartigen Auszug geführt sein und/oder entnehmbar ausgebildet sein.

Um die Schublade (10) herauszuziehen, hat sie eine in Richtung der Handhabungsvorrichtung (20) zeigende Öse. Nach dem Durchführen von Wartungsarbeiten kann die Schublade (10) wieder in die Rechenanlage hineingefahren werden. Beim Herausziehen der Schublade (10) können die elektrischen Verbindungen und die Datenverbindungen zur Rechenanlage getrennt werden oder bestehen bleiben.

Die Figur 3 zeigt eine Schublade (10) mit dem Speichermagazin (11). Im Speichermagazin (11) sind die einzelnen Festplatten (12) in Reihen und Spalten angeordnet. Jede Festplatte (12) sitzt in einem Aufnahmeschlitz (13) des Speichermagazins (11). Dieser Aufnahmeschlitz (13) ist als Steckplatz ausgebildet, in dem die einzelne Festplatte (12) elektrisch und datenmäßig mit der Schublade (10) verbunden ist. Einzelne Steckplätze können frei sein. Alle Festplatten (12) sind parallel zueinander ausgerichtet und zeigen mit ihrer Vorderseite (14) nach oben. Alle Festplatten (12) haben im Ausführungsbeispiel die gleichen äußeren Abmessungen. Es ist aber auch denkbar, Festplatten (12) unterschiedlicher äußerer Abmessungen einzusetzen. Neben jeder Festplatte (12) ist im Aufnahmeschlitz (13) eine Andrückplatte (15) angeordnet. Diese Andrückplatte (15) sichert die Kontakte der Festplatte (12) zur Schublade (10). Jede Andrückplatte (15) hat im Ausführungsbeispiel Aufnahmedurchbrüche (16). Diese Aufnahmedurchbrüche (16) ragen in den Darstellungen der Figuren 1 - 3 aus dem Speichermagazin (11) heraus.

Die Handhabungsvorrichtung (20) ist in den Darstellungen der Figuren 1 und 2 parallel zur Querrichtung (6) der Schublade (10) angeordnet. Sie umfasst ein Basisgerüst (21) und ein Traggerüst (41).

Das Basisgerüst (21) ist beispielspeise auf einem verfahrbaren Wagen angeordnet. Es umfasst vier in vertikaler Richtung (7) orientierte Führungsschienen (22). Diese Führungsschienen (22) bilden in der Draufsicht die Ecken eines Rechtecks. Hierbei zeigen die Führungsprofile (23) der einander gegenüberliegenden kurzen Seiten des Rechtecks zueinander. Die Führungsschienen (22) sind mittels Stützplatten (24) und Stützträgern (25) miteinander verbunden.

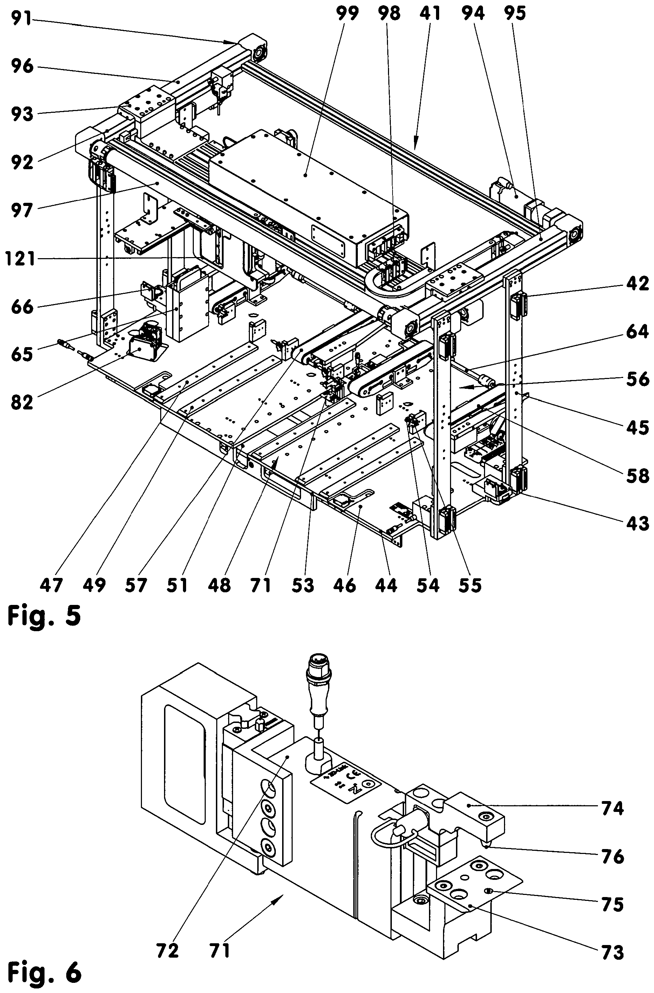

Entlang der Führungsschienen (22) ist das Traggerüst (41) geführt. Das Traggerüst (41) ist zwischen einem oberen Ende (26) der Führungsschienen (22) und einem unteren Anschlag der Führungsschienen (22) relativ zum Basisgerüst (21) höhenverstellbar ausgebildet. Hierzu hat das Traggerüst (41) pro Führungsschiene (22) zwei Kugelumlaufschuhe (42), vgl. Figur 5.

An jeder der beiden Stützplatten (24) ist eine Höhenverstelleinheit (27) angeordnet. Die einzelne Höhenverstelleinheit (27) umfasst einen an der Außenseite des Basisgerüsts (21) angeordneten Antriebsmotor (28), der über einen Riementrieb (29) eine im Basisgerüst (21) gelagerte Trapezspindel (31) antreibt. Eine am Traggerüst (41) fest angeordnete Spindelmutter (43) verschiebt das Traggerüst (41) beim Drehen der Gewindespindel (31) in der Höhenrichtung (7). Dieses Schraubgewinde ist selbsthemmend ausgebildet. Beide Höhenverstelleinheiten (27) sind im Ausführungsbeispiel miteinander synchronisiert, so dass das Traggerüst (41) immer waagerecht steht. Jeweils eine Energiekette (32) mit darin geführten Energie- und Datenleitungen verbindet das Basisgerüst (21) mit dem Traggerüst (41).

Die Figuren 4 und 5 zeigen das Traggerüst (41) in einer Unteransicht und in einer isometrischen Ansicht. Das Traggerüst (41) hat eine Grundplatte (44), die mittels vier Stützsäulen (45) mit einem oberen Tragrahmen (91) verbunden ist. Hierbei sind die Kugelumlaufschuhe (42) an den Stützsäulen (45) angeordnet.

Die Grundplatte (44) hat eine ebene Tragfläche (46), auf der in der Längsrichtung (5) orientierte Gleitbahnen (47) angeordnet sind. Dieser Bereich der Grundplatte (44) wird im Folgenden als Wartungsbereich (48) bezeichnet. Die Länge der Gleitbahnen (47) entspricht im Ausführungsbeispiel der halben Länge der Grundplatte (44) in der Längsrichtung (5). Die Oberfläche der Gleitbahnen (47) bildet eine ebene, mehrteilige Aufstellfläche (49). Die Ebene der Aufstellfläche (49) ist beispielsweise parallel zu einer Fahrebene eines die Handhabungsvorrichtung (20) tragenden Verfahrwagens.

In der Grundplatte (44) ist eine Längsrinne (51) eingeprägt. In dieser Längsrinne (51) ist eine in der Längsrichtung (5) verfahrbare Greifzange (71) geführt.

Die Greifzange (71), vgl. Figur 6, hat ein Greifergehäuse (72) und zwei Greiffinger (73, 74). Die Greiffinger (73, 74) sind im Ausführungsbeispiel übereinander angeordnet, sodass ihre Trennfuge waagerecht liegt. Auch eine andere Anordnung der Greiffinger (73, 74) ist denkbar. Der untere Greiffinger (73) ist beispielsweise starr am Greifergehäuse (72) angeordnet sind. An seinem freien Ende hat der untere Greiffinger (73) eine Aufnahmebohrung (75).

Der obere Greiffinger (74) ist relativ zum unteren Greiffinger (73) in der Höhenrichtung (7) verfahrbar. Die beiden Greiffinger (73, 74) können jedoch auch schwenkbar zueinander ausgebildet sein. An seinem freien Ende hat der obere Greiffinger (74) einen Eingriffsdorn (76), dessen Durchmesser kleiner ist als der Durchmesser der Aufnahmebohrung (75). In der geschlossenen Stellung der Greifzange (71) durchdringt der Eingriffsdorn (76) die Aufnahmebohrung (75). Die Greifzange (71) ist beispielsweise elektromotorisch betätigt.

Zum Verfahren der Greifzange (71) entlang der Grundplatte (44) ist unterhalb der Grundplatte (44) ein Greifzangenmotor (77) angeordnet. Dieser treibt über einen Riementrieb (78) eine Gewindespindel (79), die in einer am Greifergehäuse (72) angeordneten Gewindemutter (81) geführt ist. Auch der Einsatz einer Trapezgewindespindel ist denkbar. Zwei an der Grundplatte (44) angeordnete Führungsleisten (52) führen die Greifzange (71) in der Längsrichtung (5). Die Endlagen des Verfahrwegs der Greifzange (71) sind beispielsweise mittels Endund/oder Näherungsschaltern überwacht.

In der ausgefahrenen Stellung steht die Greifzange (71) über den Querrand (53) der Grundplatte (44) über. Diese Stellung sowie das Öffnen und Schließen der Greifzange (71) in dieser ausgefahrenen Stellung wird beispielsweise mittels einer auf der Grundplatte (44) sitzenden Greifzangenkamera (82) überwacht. Im Ausführungsbeispiel ist die Normale zur Kameraebene in einem Winkel von 24 Grad zur Längsrichtung (5) orientiert. Dieser Winkel kann beispielsweise bis zu 75 Grad betragen. Der Winkel der Greifzangenkamera (82) zur Längsrichtung (5) kann einstellbar sein.

Im eingefahrenen Zustand der Greifzange (71) sind neben der Greifzange (71) elastisch verformbare Anschlagpuffer (54) angeordnet. Beispielsweise neben diesen Anschlagpuffern (54) sind auf der Grundplatte (44) Näherungsschalter (55) angeordnet. Die Näherungsschalter (55) können induktiv oder kapazitiv bedämpft ausgebildet sein.

In der Längsrichtung (5) versetzt zum Wartungsbereich (48) ist ein Magazinbereich (56) angeordnet. In diesem Magazinbereich (56) sind vier Bandförderer (57, 58) angeordnet. Der jeweilige Obertrum des einzelnen Bandförderers (57; 58) liegt beispielsweise in einer gemeinsamen Ebene mit seinem gekoppelten benachbarten Bandförderer (57; 58). Die Förderrichtung der Bandförderer (57, 58) ist in der Längsrichtung (5) orientiert. Zwei zueinander benachbarte Bandförderer (57) werden von einer ersten Bandförderer-Antriebseinheit (59) und die zwei anderen zueinander benachbarten Bandförderer (58) mittels einer zweiten Bandförderer-Antriebseinheit (61) angetrieben. Die beiden Bandförderer-Antriebseinheiten (59, 61) sind spiegelbildlich zueinander aufgebaut. Die einzelne Bandförderer-Antriebseinheit (59; 61) hat einen Bandfördermotor (62), einen Riementrieb (63) und eine Verbindungswelle (64) der beiden von dieser Antriebseinheit (59; 61) angetriebenen Bandförderer (57; 58).

Auf der Grundplatte (44) steht weiterhin eine Festplattenidentifikationsvorrichtung (65). Diese hat einen Aufnahmeschlitz (66), dessen Abmessungen geringfügig größer sind als die Abmessungen einer Festplatte (12; 112) in der Draufsicht. Der Aufnahmeschlitz (66) ist in der Längsrichtung (5) orientiert. Die Festplattenidentifikationsvorrichtung (65) hat eine optische Leseeinrichtung, um die Daten eines Typenschilds einer Festplatte (12; 112) aufzunehmen.

In den Darstellungen der Figuren 1 und 2 stehen auf beiden Bandförderern (57; 58) jeweils ein Festplattenmagazin (111; 115). Beispielsweise ist das vom Wartungsbereich (48) aus gesehene rechte Festplattenmagazin (115) ein Festplattenmagazin (115) für gebrauchte Festplatten (12) und das links stehende Festplattenmagazin (111) ein Festplattenmagazin (111) für neue Festplatten (112). Beide Festplattenmagazine (111, 115) haben einen Aufnahmekorb (113), in dem ein Einsatzträger (114) mit den Festplatten (12; 112) angeordnet ist. Sowohl die gebrauchten Festplatten (12) als auch die neuen Festplatten (112) haben die gleiche Ausrichtung.

Der obere Tragrahmen (91) ist als Kreuzschlitten (91) ausgebildet. Zwei mit den Stützsäulen (45) verbundene Längsführungsschienen (92) tragen jeweils eine Laufkatze (93). Ein Längsantriebsmotor (94) treibt z.B. einen Zahnriemen (95), der mit einem Zahnriementrieb (96) der anderen Längsführungsschiene (92) über eine Koppelstange (97) verbunden ist. Jeweils ein Zahnriemen (95) ist mit einer Laufkatze (93) verbunden.

Die beiden Laufkatzen (93) tragen gemeinsam zwei Querführungsschienen (98). Die Querführungsschienen (98) tragen einen Steuerkasten (99). Weiterhin hängt an den Querführungsschienen (98) verfahrbar eine Festplattengreifeinheit (121).

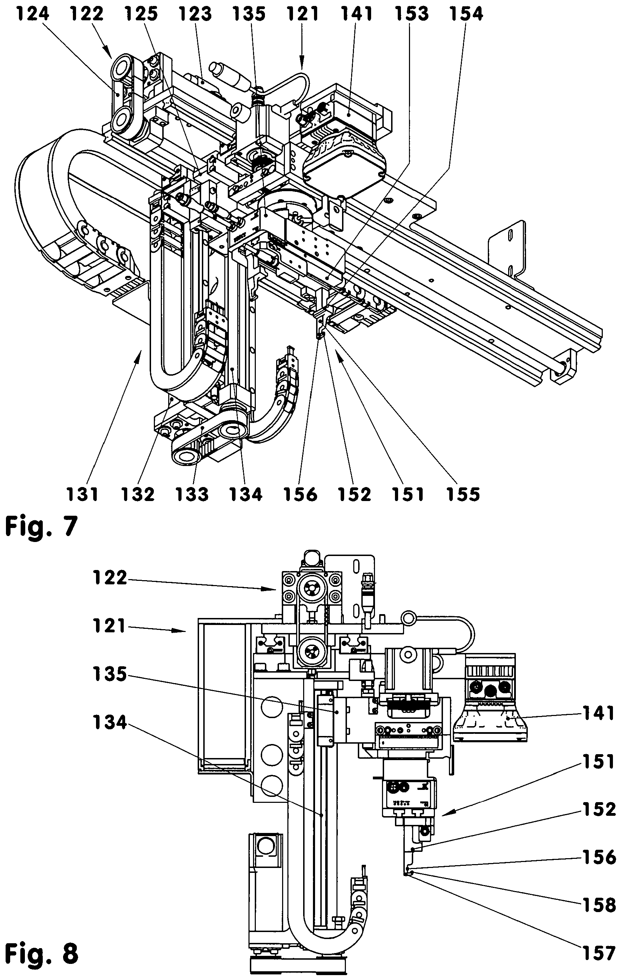

Die Figuren 7 und 8 zeigen die Festplattengreifeinheit (121). Sie hat eine Querverfahreinheit (122), eine Höhenverstelleinheit (131), eine optische Positionskontrolleinheit (141) und eine Parallelgreifvorrichtung (151).

Die Querverfahreinheit (122) hat einen obenliegenden Querverfahrmotor (123), der mittels eines Riementriebs (124) einen Greiferverfahrschlitten (125) antreibt.

Die Höhenverstellung der Parallelgreifvorrichtung (151) relativ zum Traggerüst (41) erfolgt mittels der Höhenverstelleinheit (131). Die Höhenverstelleinheit (131) umfasst einen Hubmotor (132) der mittels eines Riementriebs (133) und einer Trapezspindel (134) einen die Parallelgreifvorrichtung (151) tragenden Hubschlitten (135) antreibt.

Die Parallelgreifeinheit (151) kann zusätzlich relativ zum Kreuzschlitten (91) schwenkbar ausgebildet sein. Die Schwenkachse ist dabei beispielsweise in der Höhenrichtung (7) orientiert.

Die Parallelgreifvorrichtung (151) umfasst zwei parallel zueinander angeordnete Greifelemente (152). Mittels eines z.B. elektromotorischen Antriebs sind diese Greifelemente (152) im dargestellten Ausführungsbeispiel in der Querrichtung (6) verfahrbar. Beispielsweise sind sie bis zu einer gegenseitigen Anlage symmetrisch zu einer Mittenlängsebene des Greiferkörpers (153) aufeinander zu verfahrbar. Hierbei kontaktieren sich die beiden Greifelemente (152) mit jeweiligen Anschlagleisten (154).

Die Greifelemente (152) haben zueinander zeigende Greifflächen (155) sowie an ihrem freien Ende Greifhaken (156). Die beiden Greifflächen (155) sind parallel zueinander angeordnet. Sie liegen jeweils in einer durch die vertikale Richtung (7) und die Querrichtung (6) aufgespannten Ebene. Diese Greifflächen (155) umfassen die freien Enden der Greifelemente (152).

Die beiden Greifhaken (156) zeigen in die gleiche Richtung. Im Ausführungsbeispiel haben die Greifhaken (156) einen geraden Untersteg (157) mit einer niedrigen Haltenase (158). Die Hakenöffnung hat damit eine zumindest annährend konstante Höhe.

Die Festplattengreifeinheit (121) trägt eine Positionskontrolleinheit (141) in der Bauform einer Kamera (141). Diese ist beispielsweise ähnlich ausgebildet wie die Greifzangenkamera (82) auf der Grundplatte (44). Die Sichtrichtung der Kamera der Festplattengreifeinheit (121) ist zumindest annährend in vertikaler Richtung (7) nach unten gerichtet. Mit dieser Kamera (141) ist beispielsweise der Greifbereich der Greifelemente (152) überwachbar.

Um Festplatten (12) eines Speichermagazins (11) auszuwechseln, verfährt z.B. ein die Handhabungsvorrichtung (20) tragender Wagen so, dass seine Querseite zum Speichermagazin (11) zeigt. Im Magazinbereich (56) der Handhabungsvorrichtung (20) stehen ein erstes leeres Festplattenmagazin (115) und ein zweites, mit neuen Festplatten (112) beladenes Festplattenmagazin (111). Beide Festplattenmagazine (111, 115) sind beispielsweise mittels ihrer jeweiligen Bandförderer (57, 58) soweit in Richtung des Wartungsbereichs (48) verfahren, dass sie an den jeweiligen Anschlägen anliegen.

Die Lage der Handhabungsvorrichtung (20) relativ zum Speichermagazin (11) wird beispielsweise mittels einer Kamera oder mittels einer Lagekontrolle der Steuerung des Wagens geprüft.

Anschließend wird das Traggerüst (41) relativ zum Basisgerüst (21) in der Höhenrichtung (7) eingestellt, bis die Aufstellfläche (49) der Grundplatte (44) in einer Tangentialebene der Unterseite der Schublade (10) liegt. Diese Lage kann beispielsweise mittels der auf der Grundplatte (44) angeordneten Greifzangenkamera (82) geprüft werden. Hierbei wird z.B. das Traggerüst (41) so eingestellt, dass die Öse der Schublade (10) innerhalb eines vorgegebenen Toleranzfeldes liegt. Die Greifzange (71) steht zunächst in einer ersten, eingefahrenen Bereitschaftsposition. Die Greifzange (71) ist z.B. geöffnet. Die Festplattengreifeinheit (121) steht beispielsweise in ihrer oberen Endlage.

Bei verriegelter Höhenverstellung des Traggerüsts (41) relativ zum Basisgerüst (21) wird die Greifzange (71) in der Längsrichtung (5) in Richtung des Speichermagazins (11) verfahren. Sobald die Greifzange (71) die Öse erreicht hat, schließt die Greifzange (71). Die Position der Greifzange (71) in der Längsrichtung (5) wird beispielsweise mittels der Greifzangenkamera (82) überwacht. Auch der offene Zustand der Greifzange (71) und der geschlossene Zustand der Greifzange (71) nach dem Schließen kann mittels dieser auf die ausgefahrene Greifzange (71) gerichteten Greifzangenkamera (82) überwacht werden.

Sobald die Öse der Schublade (10) gegriffen ist, wird die Greifzange (71) in die Handhabungsvorrichtung (20) eingefahren. Das beispielsweise in einer Teleskopschublade gelagerte Speichermagazin (11) wird mitgezogen. Beim Herausziehen gelangt das Speichermagazin (11) in den Wartungsbereich (48) der Handhabungsvorrichtung (20). Hier wird die Schublade (10) z.B. entlang der Gleitbahnen (47) der Grundplatte (44) gezogen. Das Einziehen der Greifzange (71) ist beendet, wenn die Näherungsschalter (55) des Wartungsbereichs (48) bedämpft werden. Das Speichermagazin (11) steht jetzt im Wartungsbereich (48).

Nun wird die z.B. steuerungsmäßige Verriegelung der Festplattengreifeinheit (121) aufgehoben. Die Festplattengreifeinheit (121) verfährt mittels des Kreuzschlittens (91), bis die Parallelgreifvorrichtung (151) oberhalb einer auszutauschenden Festplatte (12) des Speichermagazins (11) steht.

Die Parallelgreifvorrichtung (151) wird nach unten verfahren. Die Greifelemente (152) werden beispielsweise so weit voneinander beabstandet, dass ihr Abstand mit dem Abstand der Aufnahmedurchbrüche (16) der Andrückplatte (15) übereinstimmt. Die Greifhaken (156) durchgreifen die Aufnahmedurchbrüche (16) und ziehen die Andrückplatte (15) geringfügig nach oben. Dies wird beispielsweise mittels der Greiferkamera (141) überwacht.

Beim Anheben der Andrückplatte (15) wird die Festplatte (12) freigegeben. Die Greifelemente (152) werden aus den Aufnahmedurchbrüchen (16) herausgefahren. Anschließend wird der Abstand der beiden Greifelemente (152) zueinander beispielsweise vergrößert. Die Parallelgreifvorrichtung (151) verfährt derart relativ zur Festplatte (12), dass die Greifelemente (152) mit den Greifflächen (155) an den Seitenrändern (17) der Festplatte (12) anliegen. Die beiden Greifelemente (152) werden dabei gegen die Festplatte (12) gedrückt, sodass sie mit der vorgegebenen Anpresskraft anliegen. Die Anpresskraft kann hierbei mittels einer Weg-, Strom- und/oder Drucküberwachung überwacht werden.

Die so gehaltene gebrauchte Festplatte (12) wird aus dem Speichermagazin (11) herausgezogen. Die Festplattengreifeinheit (121) wird anschließend u.a. mittels des Kreuzschlittens (91) so verfahren, dass die Festplatte (12) oberhalb des Festplattenmagazins (115) der gebrauchten Festplatten (12) steht. Die Festplatte (12) kann nun in das Festplattenmagazin (115) der gebrauchten Festplatten (12) abgelegt werden.

Anschließend wird mittels der Festplattengreifeinheit (121) eine neue Festplatte (112) aus dem Festplattenmagazin (111) für neue Festplatten (112) entnommen. Das Greifen der neuen Festplatte (112) erfolgt, wie oben beschrieben.

Die mittels des Parallelgreifvorrichtung (151) aufgenommene neue Festplatte (112) wird an die Festplattenidentifikationsvorrichtung (65) verfahren. Hier wird die neue Festplatte (112) in den Aufnahmeschlitz (66) eingesteckt. Nach dem Abscannen der Plattenidentifikation wird die neue Festplatte (112) mittels der Festplattengreifeinheit (121) zum Speichermagazin (11) verfahren. Hier wird die neue Festplatte (112) in den leeren Aufnahmeschlitz (13) eingesteckt. Nach dem Absetzen der Festplatte (112) kann die von den Greifelementen (152) bewirkte Klemmung der Festplatte (112) gelöst werden. Die Parallelgreifvorrichtung (151) fährt aus dem Speichermagazin (11) heraus.

Die Greifelemente (152) werden nun zueinander verfahren, bis ihr Abstand dem Abstand der Aufnahmedurchbrüche (16) entspricht. Nach dem Eingreifen der Greifhaken (156) in die Aufnahmedurchbrüche (16) wird die Andrückplatte (15) mittels der Parallelgreifvorrichtung (151) nach unten gedrückt. Die neue Festplatte (112) wird im Speichermagazin (11) gesichert.

Nachdem die Festplattengreifeinheit (121) aus dem Bereich des Speichermagazins (11) herausgefahren ist, wird entweder eine weitere Festplatte (12) des Speichermagazins (11) ausgewechselt oder das Speichermagazin (11) wird in seine Ausgangsstellung gefördert. Um die Schublade (10) mit dem Speichermagazin (11) in die Rechenanlage zu verfahren, wird diese mittels der Greifzange (71) in Richtung in die Recheneinheit hinein verschoben. Sobald die Schublade (10) ihre Ausgangsstellung in der Recheneinheit erreicht hat, wird die Greifzange (71) geöffnet. Diese Position und das Öffnen werden beispielsweise mittels der Greifzangenkamera (82) überwacht. Die geöffnete Greifzange (71) verfährt nun in Richtung des Magazinbereichs (56). Beispielsweise sobald die Greifzange (71) ihre Endlage erreicht hat, wird die steuermäßige Verriegelung der Höhenverstellung des Traggerüsts (41) wieder freigegeben. Nun können beispielsweise weitere Festplatten (12; 112) in anderer Höhe der Rechenanlage ausgetauscht werden oder der Plattenaustausch kann beendet werden. Bei der Höhenverstellung des Traggerüsts (41) werden beispielsweise die Greifzange (71) und die Festplattengreifeinheit (121) blockiert. Nach dem Abschluss des Austauschs kann der Wagen mit dem Handhabungssystem (20) wieder aus dem Bereich der Rechenanlage herausgefahren werden.

Die einzelnen Komponenten können auch anders als beschrieben ausgebildet sein. Auch der Funktionsablauf kann von dem beschriebenen Beispiel abweichen.

Auch Kombinationen der einzelnen Ausführungsbeispiele sind denkbar.

### Bezugszeichenliste:

- 5: Längsrichtung
- 6: Querrichtung
- 7: vertikale Richtung, Höhenrichtung

- 10: Schublade
- 11: Speichermagazin
- 12: Festplatten, gebrauchte Festplatte
- 13: Aufnahmeschlitz
- 14: Vorderseite von (12)
- 15: Andrückplatte
- 16: Aufnahmedurchbrüche
- 17: Seitenränder von (12)

- 20: Handhabungsvorrichtung
- 21: Basisgerüst
- 22: Führungsschienen
- 23: Führungsprofile
- 24: Stützplatten
- 25: Stützträger
- 26: oberes Ende von (22)
- 27: Höhenverstelleinheit
- 28: Antriebsmotor
- 29: Riementrieb

- 31: Trapezspindel, Gewindespindel
- 32: Energiekette

- 41: Traggerüst
- 42: Kugelumlaufschuhe
- 43: Spindelmutter
- 44: Grundplatte
- 45: Stützsäulen
- 46: Tragfläche
- 47: Gleitbahnen
- 48: Wartungsbereich
- 49: Aufstellfläche

- 51: Längsrinne
- 52: Führungsleisten
- 53: Querrand
- 54: Anschlagpuffer
- 55: Näherungsschalter
- 56: Magazinbereich
- 57: Bandförderer
- 58: Bandförderer
- 59: Bandförderer-Antriebseinheit

- 61: Bandförderer-Antriebseinheit
- 62: Bandfördermotor
- 63: Riementrieb
- 64: Verbindungswelle
- 65: Festplattenidentifikationsvorrichtung
- 66: Aufnahmeschlitz

- 71: Greifzange
- 72: Greifergehäuse
- 73: Greiffinger, unten
- 74: Greiffinger, oben
- 75: Aufnahmebohrung
- 76: Eingriffsdorn
- 77: Greifzangenmotor
- 78: Riementrieb
- 79: Gewindespindel

- 81: Gewindemutter
- 82: Greifzangenkamera
- 91: oberer Tragrahmen, Kreuzschlitten
- 92: Längsführungsschienen
- 93: Laufkatze
- 94: Längsantriebsmotor
- 95: Zahnriemen
- 96: Zahnriementrieb
- 97: Koppelstange
- 98: Querführungsschienen
- 99: Steuerkasten

- 111: Festplattenmagazin
- 112: Festplatte, neue Festplatte
- 113: Aufnahmekorb
- 114: Einsatzträger
- 115: Festplattenmagazin

- 121: Festplattengreifeinheit
- 122: Querverfahreinheit
- 123: Querverfahrmotor
- 124: Riementrieb
- 125: Greiferverfahrschlitten

- 131: Höhenverstelleinheit
- 132: Hubmotor
- 133: Riementrieb
- 134: Trapezspindel
- 135: Hubschlitten

- 141: Positionskontrolleinheit, Kamera, Greiferkamera

- 151: Parallelgreifvorrichtung
- 152: Greifelemente
- 153: Greiferkörper
- 154: Anschlagleisten
- 155: Greifflächen
- 156: Greifhaken
- 157: Untersteg
- 158: Haltenase

## Patentansprüche

1. Handhabungsvorrichtung (20) zum Austausch von Festplatten (12) aus einer Schublade (10) mit einer Vielzahl von in einem Speichermagazin (11) angeordneten Festplatten (12), die ein Basisgerüst (21) und ein relativ hierzu in Höhenrichtung (7) verstellbares Traggerüst (41) aufweist,
- wobei das Traggerüst (41) entlang von Führungsschienen (22) des Basisgerüsts (21) geführt ist,
- wobei das Traggerüst (41) einen Wartungsbereich (48) mit einer Aufstellfläche (49) aufweist,
- wobei parallel zur Aufstellfläche (49) eine Greifzange (71) linear verfahrbar ist zum Ziehen der Schublade (10) mit dem Speichermagazin (11) auf die Aufstellfläche (49) und zum Fördern dieser Schublade (10) in ihre Ausgangsstellung,
- wobei eine eine Parallelgreifvorrichtung (151) aufweisende Festplattengreifeinheit (121) an einem Kreuzschlitten (91) des Traggerüsts (41) verfahrbar hängt und
- wobei die Parallelgreifvorrichtung (151) relativ zum Traggerüst (41) in der Höhe mittels einer Höhenverstelleinheit (131) verstellbar ist.

2. Handhabungsvorrichtung (20) nach Anspruch 1, **dadurch gekennzeichnet, dass** die Festplattengreifeinheit (121) zwei stufenlos verstellbare, parallel zueinander angeordnete Greifelemente (152) hat.

3. Handhabungsvorrichtung (20) nach Anspruch 2, **dadurch gekennzeichnet, dass** die Greifelemente (152) an ihren freien Enden abgewinkelt ausgebildet sind.

4. Handhabungsvorrichtung (20) nach Anspruch 1, **dadurch gekennzeichnet, dass** das Traggerüst (41) mindestens ein Festplattenmagazin (111; 115) und eine Festplattenidentifikationsvorrichtung (65) trägt.

5. Handhabungsvorrichtung (20) nach Anspruch 4, **dadurch gekennzeichnet, dass** die Festplattenidentifikationsvorrichtung (65) eine optische Leseeinrichtung aufweist.

6. Handhabungsvorrichtung (20) nach Anspruch 1, **dadurch gekennzeichnet, dass** eine Höhenverstellung des Traggerüsts (41) die Greifzange (71) und die Festplattengreifeinheit (121) blockiert.

7. Handhabungsvorrichtung (20) nach Anspruch 1, **dadurch gekennzeichnet, dass** die Festplattengreifeinheit (121) oberhalb der Aufstellfläche (49) und oberhalb eines Magazinbereichs (56) angeordnet ist.

8. Handhabungsvorrichtung (20) nach Anspruch 1, **dadurch gekennzeichnet, dass** die Aufstellfläche (49) mittels auf einer Grundplatte (44) angeordneter Gleitbahnen (47) gebildet wird.

9. Handhabungsvorrichtung (20) nach Anspruch 1, **dadurch gekennzeichnet, dass** das Basisgerüst (21) in einer Ebene parallel zur Aufstellfläche (49) verfahrbar ist.

## Claims

1. A handling device (20) for exchanging hard drives (12) from a drawer (10) having a plurality of hard drives (12) arranged in a storage magazine (11), which handling device has a base frame (21) and a supporting frame (41), which is adjustable relative thereto in the vertical direction (7),
- wherein the supporting frame (41) is guided along guide rails (22) of the base frame (21),
- wherein the supporting frame (41) has a maintenance region (48) with a rest surface (49),
- wherein gripping tongs (71) are movable linearly parallel to the rest surface (49) in order to pull the drawer (10) with the storage magazine (11) onto the rest surface (49) and to convey this drawer (10) into its starting position,
- wherein a hard drive gripping unit (121) having a parallel gripping device (151) hangs movably from a cross slide (91) of the supporting frame (41), and
- wherein the parallel gripping device (151) is adjustable vertically relative to the supporting frame (41) by means of a height adjustment unit (131).

2. The handling device (20) according to Claim 1, **characterised in that** the hard drive gripping unit (121) has two continuously adjustable gripping elements (152) arranged parallel to one another.

3. The handling device (20) according to Claim 2, **characterised in that** the gripping elements (152) are angled at their free ends.

4. The handling device (20) according to Claim 1, **characterised in that** the supporting frame (41) bears at least one hard drive magazine (111; 115) and a hard drive identification device (65).

5. The handling device (20) according to Claim 4, **characterised in that** the hard drive identification device (65) has an optical reader.

6. The handling device (20) according to Claim 1, **characterised in that** a height adjustment of the supporting frame (41) blocks the gripping tongs (71) and the hard drive gripping unit (121).

7. The handling device (20) according to Claim 1, **characterised in that** the hard drive gripping unit (121) is arranged above the rest surface (49) and above a magazine region (56).

8. The handling device (20) according to Claim 1, **characterised in that** the rest surface (49) is formed by means of slide tracks (47) arranged on a baseplate (44).

9. The handling device (20) according to Claim 1, **characterised in that** the base frame (21) is movable in a plane parallel to the rest surface (49).

## Revendications

1. Dispositif de manutention (20), destiné à échanger des disques durs (12) à partir d'un tiroir (10) avec une pluralité disques durs (12) placés dans un magasin de stockage (11), qui comporte un châssis de base (21) et un châssis de support (41) ajustable par rapport à celui-ci dans le sens de la hauteur (7),
- le châssis de support (41) étant guidé le long de rails de guidage (22) du châssis de base (21),
- le châssis de support (41) comportant une zone de maintenance (48) pourvue d'une surface de dépose (49),
- une pince de préhension (71) étant déplaçable de manière linéaire à la parallèle de la surface de dépose (49), pour tirer le tiroir (10) avec le magasin de stockage (11) sur la surface de dépose (49) et pour convoyer ledit tiroir (10) dans sa position de départ,
- une unité de préhension (121) de disque dur comportant un dispositif de préhension (151) parallèle étant accroché de manière déplaçable sur un chariot croisé (91) du châssis de support (41)
- le dispositif de préhension (151) parallèle étant ajustable en hauteur par rapport au châssis de support (41) au moyen d'une unité d'ajustage (131) en hauteur.

2. Dispositif de manutention (20) selon la revendication 1, **caractérisé en ce que** l'unité de préhension (121) de disque dur détient deux éléments préhenseurs (152) ajustables en continu, placés à la parallèle l'un de l'autre.

3. Dispositif de manutention (20) selon la revendication 2, **caractérisé en ce que** les éléments préhenseurs (152) sont conçus en étant coudés sur leurs extrémités libres.

4. Dispositif de manutention (20) selon la revendication 1, **caractérisé en ce que** le châssis de support (41) porte au moins un magasin (111 ; 115) de disques dur et un dispositif d'identification (65) de disques durs.

5. Dispositif de manutention (20) selon la revendication 4, **caractérisé en ce que** le dispositif d'identification (65) de disques durs comporte un système de lecteur optique.

6. Dispositif de manutention (20) selon la revendication 1, **caractérisé en ce qu'**un ajustage en hauteur du châssis de support (41) bloque la pince de préhension (71) et l'unité de préhension (121) de disque.

7. Dispositif de manutention (20) selon la revendication 1, **caractérisé en ce que** l'unité de préhension (121) de disque dur est placée au-dessus de la surface de dépose (49) et au-dessus d'une zone (56) du magasin.

8. Dispositif de manutention (20) selon la revendication 1, **caractérisé en ce que** la surface de dépose (49) est constituée au moyen de glissières (47) placées sur une plaque d'embase (44).

9. Dispositif de manutention (20) selon la revendication 1, **caractérisé en ce que** le châssis de base (21) est déplaçable dans un plan à la parallèle de la surface de dépose (49).
